# EUROPEAN PATENT APPLICATION

(11) **EP 1 324 360 A2**
(43) Date of publication of application: **02.07.2003**
(21) Application number: 02028427.9
(22) Date of filing: 18.12.2002
(51) Int. Cl.: H01G 9/155

(54) **Electric double layer capacitor and method of fabricating the same**

(30) Priority: 18.12.2001 KR 2001080447
(71) Applicant: Camatech Co., Ltd., Paldal-gu, Suwon-City, Gyunggi-do 442-833 (KR); Lee, Young, Wook, Ichon City, Gyunggi-do 467-832 (KR)
(72) Inventor: Kwon, Kyeong-Tae, Kumkang-village A-101,91-16, Hwasung-city, Gyunggi-do 463-821 (KR); Lee, Yong-Wook, Ichon-city, Gyunggi-do 467-832 (KR); Kang, An-Soo, Seodaemun-gu, Seoul 120-847 (KR); Kim, Kyong-Min, Yongin-city, Gyunggi-do 449-942 (KR)
(74) Representative: Molnia, David

(57) **Abstract**

Disclosed is an electric double layer capacitor, including a unit cell of completely combined polarizable electrodes and metal cases, and a fabrication method thereof. The method includes the steps of pitting or etching any one face of a metal substrate made of the same material as the metal cases to form a plurality of indentations, coating slurry of an electrode material consisting mainly of an activated carbon powder onto the indented face of the metal substrate, compressing the coated face by use of a heating roll to afford the polarizable electrodes, and welding the polarizable electrodes and the metal cases after aligning the centers thereof with each other. In the thusly fabricated electric double layer capacitor, the electrode material of the activated carbon powder is combined with the metal case through the metal substrate adhered to the metal case by welding. Thereby, each element constituting the unit cell of the electric double layer capacitor is physically and electrically combined, while exhibiting excellent electric properties due to good contact between electrode material particles.

## Description

### BACKGROUND OF THE INVENTION

### Field of the Invention

The present invention concerns electric double layer capacitors and methods of fabricating the same. More specifically, the present invention is directed to an electric double layer capacitor comprising a unit cell composed of polarizable electrodes and metal cases combined together, each polarizable electrode being formed by coating a slurry of an electrode material consisting mainly of activated carbon powder to a metal substrate made of the same material as the metal cases; and a fabrication method thereof.

### Description of the Prior Art

With great advances in technologies for appliances and electronic and industrial apparatuses, electronic parts have recently been miniaturized and have been manufactured to be high-performance and lightweight. Further, there are required multifunctional electronic parts having various properties. In this regard, an electric double layer capacitor provided by combining a function of a secondary cell and a function of a capacitor have been increasingly used, which stores electric charge in electric double layers formed at the interfaces between polarizable electrodes and metal cases.

Such an electric double layer capacitor comprises a unit cell, composed of anode and cathode metal cases for encasing two polarizable electrodes comprising an anode and a cathode impregnated with liquid- or solid-state electrolyte, a porous separator functioning to conduct only ions between the two electrodes, having an electrical insulating property and preventing a short-circuit failure, and a gasket having an electrical insulating property and functioning to prevent the electrolyte from leaking and prevent a short-circuit failure. Two or three unit cells are stacked in an electrical series, with the terminals of the anodes and the cathodes combined with each other, and the stacked unit cells are accommodated in an outer packing case made of a metal.

In the unit cell of the electric double layer capacitor, each polarizable electrode is adhered to an inner part of a metal case, whereby electric energy transferred to the metal case from the exterior of the capacitor is further transferred to the electrolyte in the polarizable electrode. Hence, the metal case and the polarizable electrode should be excellent in electroconductivity and the polarizable electrode should have a shape complementary to the shape of the metal case.

Since an adhered junction between the polarizable electrode and the metal case acts as a current collector, the metal case and the polarizable electrode should be completely combined. Otherwise, electrical properties of the electric double layer capacitor, such as capacitance, internal resistance and leakage current, are degraded. Further, the center of the metal case should be aligned with the center of the polarizable center. Otherwise, electrical performance of the capacitor is lowered.

Typically, as to a unit cell of such an electric double layer capacitor, a polarizable electrode adhered to a metal case is afforded by coating an electrode material of activated carbon powder in slurry state onto a surface of the metal case. However, since the polarizable electrode of paste phase is difficult to handle and contact resistance of activated carbon particles is high, the activated carbon of a powder form is prepared to a solid-state sheet or a fibrous activated carbon sheet, which is then fixed to the metal case by use of an adhesive or by a welding process.

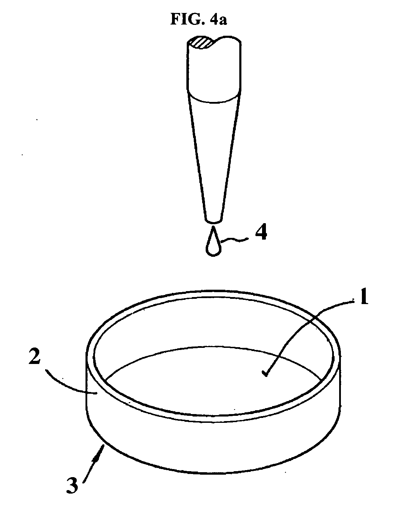

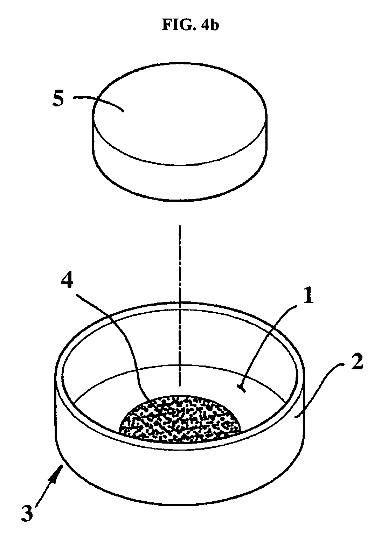

Referring to Figs. 4a and 4b, there is shown a process of fabricating a unit cell of an electric double layer capacitor according to a conventional embodiment, in which an activated carbon powder prepared to a solid-state sheet is cut to have a predetermined size and shape, to form a polarizable electrode 5, which is adhered to an inner surface of a metal case 3 comprising a disc-shaped bottom wall 1 and a cylindrical sidewall 2 extending therefrom, that is to say, to an inner surface of the bottom wall 1. As such, the adhering process is performed by applying a conductive adhesive 4 of liquid phase, such as carbon paste or a conductive polymer on the metal case 3. Finally, a compressing process is carried out, thus obtaining a desired unit cell (1^{st} conventional technique).

However, the above technique is disadvantageous in terms of decreased production efficiency, attributed to such a procedure of applying the adhesive 4 directly by a person. Also, an additional drying process must be performed, thus complicating the preparation process. In particular, the adhered polarizable electrode 5 may be easily separated from the metal case 3 under external impact or by rapid cooling after drying at high temperatures. In cases where an outer diameter of the polarizable electrode 5 is less than an inner diameter of the cylindrical sidewall 2 of the metal case 3, the electrode 5 may become eccentrically positioned within the metal case 3 if the case 3 is shaken before the adhesive 4 has completely dried. Therefore, the center of the metal case 3 does not align with the center of the electrode 5, decreasing electrical properties of the unit cell.

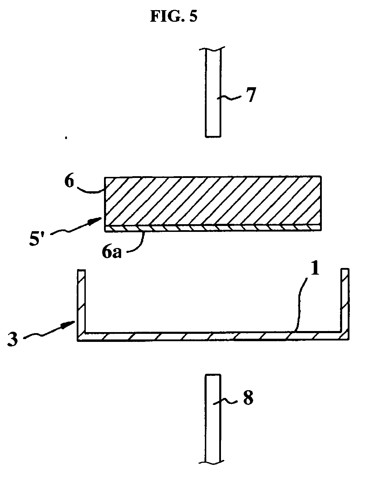

With reference to Fig. 5, there is shown a process of combining a polarizable electrode with a metal case of a unit cell of an electric double layer capacitor according to another conventional embodiment, in which a metal component 6a such as aluminum (Al), nickel (Ni) or titanium (Ti) is plasma sprayed onto a fibrous activated carbon sheet 6. Subsequently, a polarizable electrode 5' of the fibrous activated carbon sheet cut to a predetermined size and shape is welded to a metal case 3 using a positive welding electrode 7 and a negative welding electrode 8 (2^{nd} conventional technique).

However, the above technique suffers from certain drawbacks, such as expensive polarizable electrode 5' used as the fibrous activated carbon sheet, and a complicated fabrication process due to a spray coating process of the metal component performed additionally. Further, since equipment required to perform the spray coating process of the metal is expensive, such a process is difficult to practically use. Furthermore, the adhering manner by the spray coating of the metal is used only in case of a fibrous polarizable electrode material, and the material loss during performing a fabrication process is large, thus increasing a final price of a product.

### SUMMARY OF THE INVENTION

Therefore, it is an object of the present invention to solve the problems in the prior art and to provide an electric double layer capacitor which is advantageous in terms of excellent electric properties, such as capacitance, internal resistance and leakage current, by coating a paste electrode material to a metal substrate and compressing the coated material using a heating roll, thus increasing a contact area of electrode material particles upon formation of a polarizable electrode constituting a unit cell thereof. In particular, in order to overcome the drawbacks caused by use of an adhesive or spray coating of metal plasma in conventional techniques, an electrode material is adhered to a metal substrate made of the same material as a metal case, and such a metal substrate is welded to the metal case after aligning the centers thereof with each other, whereby the electrode material and the metal case are combined through the metal substrate to conduct electricity, without use of an adhesive or requiring a spray coating process of metal plasma. Thus, the electric double layer capacitor of the present invention exhibits superior electric properties and comprises unit cells each composed of firmly combined elements.

It is another object of the present invention to provide a method of fabricating an electric double layer capacitor.

### BRIEF DESCRIPTION OF THE DRAWINGS

Fig. 1 is a perspective view showing a unit cell of an electric double layer capacitor according to the present invention;
Fig. 2 is a cross-sectional view showing the unit cell of the electric double layer capacitor according to the present invention;
Fig. 3 is a cross-sectional view showing a process of combining a polarizable electrode with a metal case of the electric double layer according to the present invention;
Figs. 4a and 4b are perspective views showing a process of fabricating a unit cell of an electric double layer capacitor according to a conventional embodiment; and
Fig. 5 is a cross-sectional view showing a process of combining a polarizable electrode with a metal case of a unit cell of an electric double layer capacitor according to another conventional embodiment.

### DETAILED DESCRIPTION OF THE INVENTION

An electric double layer capacitor of the present invention is characterized by comprising a polarizable electrode composed of slurry of an activated carbon powder coated onto a metal substrate made of the same material as a metal case and having indentations formed on any one face thereof, and the metal case, welded together after the center of the polarizable electrode is aligned with the center of the metal case.

Based on the present invention, the electric double layer capacitor is fabricated by preparing an electrode material mainly comprising an activated carbon powder in the form of a slurry, pitting or etching any one face of a metal substrate made of the same material as a metal case to form a plurality of indentations, coating the slurry of the activated carbon powder onto the indented face of the metal substrate and drying the coated face, compressing the coated face by use of a heating roll to afford a polarizable electrode, and welding the polarizable electrode and the metal case after aligning the centers thereof with each other.

Hereinafter, a description will be given of an electric double layer capacitor and a fabrication method thereof, with reference to the attached drawings.

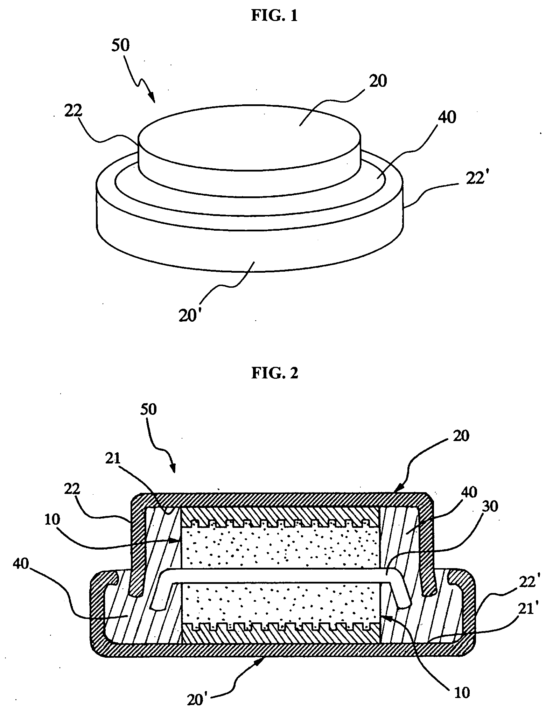

As shown in Figs. 1 and 2, the electric double layer capacitor of the present invention comprises a unit cell 50 composed of an upper metal case 20 and a lower metal case 20'; the upper metal case 20 having a polarizable electrode 10 set therein, a disc-shaped bottom wall 21 and a cylindrical sidewall 22 extending from the bottom wall 21 and connected to a positive current terminal; and the lower metal case 20' connected to a negative current terminal, and having a polarizable electrode 10 set therein, a bottom wall 21' and a sidewall 22', provided that an inner diameter of the lower metal case 20' is larger than that of the upper metal case 20. These elements are insulated by a porous separator 30 set between the two electrodes 10 to conduct only ions therethrough, and a gasket 40 set in the metal cases 20 and 20' and having properties of electrical insulation and prevention of a short-circuit failure.

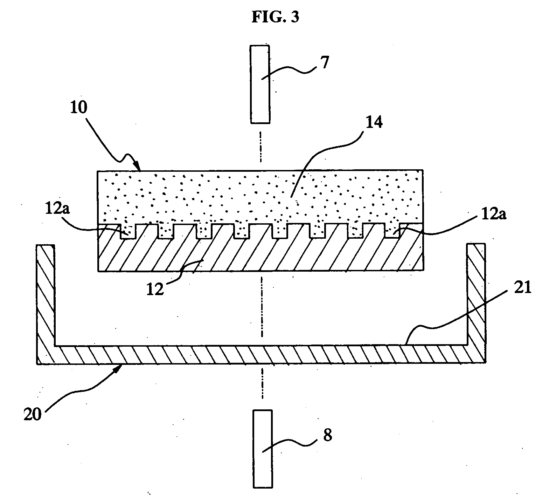

In Fig. 3, each polarizable electrode 10 is formed by adhering an electrode material of activated carbon powder 14 onto a metal substrate 12 having a plurality of indentations 12a on any one face thereof. The face opposite to the indented face of the metal substrate 12 constituting the polarizable electrode 10 is welded to an inner part of a metal case 20 or 20', in other words, onto the bottom wall 21 or 21', using a positive welding electrode 7 and a negative welding electrode 8 after the center of the metal cases 20 and 20' is aligned with the center of the polarizable electrodes 10.

In such a case, the electrode material of the activated carbon powder 14 is combined to each metal case 20 or 20' through the metal substrate 12 functioning as a current collector. The electrode material of activated carbon powder 14 in slurry state is subjected to coating and compressing processes, thereby adhering the electrode material in compact particle state to the metal substrate 12, the center of which is aligned with the center of a metal case 20 and 20', and the metal substrate 12 is welded to the metal case 20 or 20'. Therefore, each element constituting the unit cell 50 of the electric double layer capacitor is firmly combined in a physically and electrically stable state.

The metal substrate 12 has a capacitance of 600-6000 µF on a basis of capacitance of a general electrolytic capacitor, and is 10-150 µm thick. If the thickness is less than 10 µm, a welding process is difficult to perform onto the metal cases 20 and 20'. On the other hand, if the thickness exceeds 150 µm, the polarizable electrode 10 becomes thick and a distance between the metal cases 20 and 20' and the electrode material of activated carbon powder 14 becomes long, thus decreasing electroconductivity between these elements.

The indentations 12a of the metal substrate 12 are formed by pitting or etching. These indentations 12a function to enlarge a contact area between the electrode material 14 and the metal substrate 12, thus increasing electroconductivity therebetween and firmly combining them.

The metal substrate 12 is made of the same material as the metal cases 20 and 20' combined therewith. Thereby, since the metal substrate 12 of the polarizable electrode 10 and the metal cases 20 and 20' are made of the same material, the electric double layer capacitor exhibits excellent electric properties attributable to electric current conductance by metal-metal contact:

Onto the indented face of the metal substrate 12, the slurry of activated carbon powder is coated by use of a roll coater or knife coater at a thickness of 20-200 µm, dried at 40-200 °C, to adhere the electrode material of activated carbon powder 14. The slurry of activated carbon powder is a paste electrode material comprising an electrolyte, a binder and a conductive additive added to the activated carbon powder, and is more firmly adhered to the metal substrate 12 through the following compressing process.

The coated face is subjected to a compressing process by use of a heating roll at 100-250 °C. Thereby, the electrode material 14 is sufficiently filled into and adhered to the indentations 12a, and thus is completely integrated with the metal substrate 12. Further, the particles of activated carbon powder are sufficiently compacted. In addition, a density of activated carbon powder particles per unit volume is increased, thus decreasing contact resistance. This means that an internal resistance of the unit cell 50 of the electric double layer capacitor is decreased.

The polarizable electrode sheet after being subjected to the compressing process is cut into polarizable electrodes 10 having predetermined shapes and sizes, included in the metal cases 20 and 20' having complementary shapes to the polarizable electrodes, and welded to the metal cases 20 and 20' using positive and negative welding electrodes after aligning the centers thereof with each other. The upper metal case 20 and the lower metal case 20' having the polarizable electrodes 10 are insulated by the separator 30 and the gasket 40, and are compressed, thus affording a unit cell 50.

In addition, it is preferred that the metal cases 20 and 20' are obtained by coating a metal, for example, Al, Ni, Ta or Ti, onto a surface of SUS alloy at a thickness of 0.01-0.1 mm. Commonly, each metal case is exemplified by SUS alloy, such as SUS304 or SUS316. Coating of a metal component including Al, Ni, Ta or Ti results in preventing corrosion upon performing a welding process and in preventing formation of metal potential difference. Such a coating metal may be selectively used depending on kinds of products. For instance, in case of using a metal substrate functioning as a current collector made of aluminum foil, aluminum is melt-coated onto a SUS alloy of metal cases 20 and 20'.

The following Table 1 shows capacitance, leakage current and internal resistance properties of unit cells of conventional electric double layer capacitors as shown in Figs. 4a, 4b (first conventional embodiment) and Fig. 5 (second conventional embodiment), and the unit cell of the electric double layer capacitor of the present invention.

**TABLE 1**

| | Capacitance (F) | Leakage Current (µA) | Internal Resistance (Ω) |
|---|---|---|---|
| 1^{st} Conventional Unit Cell | 0.041 | 100 | 100 |
| 2^{nd} Conventional Unit Cell | 0.044 | 110 | 97 |
| Inventive Unit Cell | 0.054 | 95 | 88 |

From the results shown in the above table, it can be seen that the unit cell of the present invention is superior in terms of capacitance, internal resistance and leakage current to conventional unit cells.

As described above, when the unit cell of the electric double layer capacitor of the present invention is formed, an adhesive is not used and a spray coating process of metal plasma is not required, thereby providing the electric double layer capacitor which is advantageous in terms of no eccentric positioning of the polarizable electrodes in the metal cases, a simplified production process, stable physical and electrical combination of elements, and no separation of the polarizable electrode from the metal case.

In addition, the polarizable electrodes 10 and the metal cases 20 and 20' exhibit electric conductance through metal-metal contact by the metal substrates 12 made of the same material as the metal cases, therefore the inventive capacitor having excellent electric properties. The electrode material of activated carbon powder coated to the metal substrate is subjected to a compressing process using a heating roll, thus increasing an electrode density of the electrode material, thereby decreasing contact resistance and decreasing internal resistance of the unit cell.

The present invention has been described in an illustrative manner, and it is to be understood that the terminology used is intended to be in the nature of description rather than of limitation. Many modifications and variations of the present invention are possible in light of the above teachings. Therefore, it is to be understood that within the scope of the appended claims, the invention may be practiced otherwise than as specifically described.

## Claims

1. An electric double layer capacitor comprising two metal cases each having a disc-shaped bottom wall and a cylindrical sidewall extending from the bottom wall; a polarizable electrode set in each of the metal cases and comprising a paste electrode material including an activated carbon powder, an electrolyte, a binder and a conductive additive; a separator made of a porous material and set between the polarizable electrodes of the two meal cases to function to conduct only ions therethrough; and a gasket having an electrical insulating property and set in the metal cases to function to prevent a short-circuit failure,
wherein each of the polarizable electrodes comprises a metal substrate made of the same material as the metal cases and having a plurality of indentations formed on any one face thereof by pitting or etching, and an electrode material in slurry state including the activated carbon powder, the electrolyte, the binder and the conductive additive coated and compressed onto the indented face of the metal substrate by use of a heating roll at 100-250 °C, and
the polarizable electrodes and the metal cases are welded together after the centers thereof are aligned with each other.

2. The capacitor as defined in claim 1, wherein each of the metal cases comprises an Al, Ni, Ta or Ti metal coated onto a surface of a SUS alloy at a thickness of 0.01-0.1 mm.

3. The capacitor as defined in claim 1 or 2, wherein the metal substrate is 10-150 µm thick.

4. A method of fabricating an electric double layer capacitor comprising two metal cases each having a disc-shaped bottom wall and a cylindrical sidewall extending from the bottom wall; a polarizable electrode set in each of the metal cases and comprising a paste electrode material including an activated carbon powder, an electrolyte, a binder and a conductive additive; a separator made of a porous material and set between the polarizable electrodes of the two metal cases to function to conduct only ions therethrough; and a gasket having an electrical insulating property and set in the metal cases to function to prevent a short-circuit failure, the method comprising the following steps of:
mixing the activated carbon powder with the electrolyte, the binder and the conductive additive, to prepare slurry of the activated carbon powder;
pitting or etching any one face of a metal substrate made of the same material as the metal cases, to form a plurality of indentations on the face;
coating the slurry of the activated carbon powder onto the indented face of the metal substrate, followed by drying the coated face;
compressing the coated face by use of a heating roll at 100-250 °C, thereby affording a polarizable electrode sheet; and
cutting the polarizable electrode sheet into polarizable electrodes having shapes and sizes complementary to the metal cases, followed by welding the polarizable electrodes and the metal cases together after aligning the centers thereof with each other.
